# EUROPEAN PATENT SPECIFICATION

(11) **EP 2 707 645 B1**
(45) Date of publication and mention of the grant of the patent: **04.03.2015**
(21) Application number: 12730629.8
(22) Date of filing: 11.05.2012
(51) Int. Cl.: G05D 16/16, F17C 13/04

(54) **PRESSURE REDUCTION SYSTEM FOR A FUEL GAS DISTRIBUTION NETWORK**
DRUCKMINDERUNGSSYSTEM FÜR EIN BRENNGASVERTEILUNGSNETZWERK
SYSTÈME DE RÉDUCTION DE PRESSION D'UN RÉSEAU DE DISTRIBUTION DE GAZ COMBUSTIBLE

(30) Priority: 12.05.2011 IT TO20110426
(43) Date of publication of application: 19.03.2014
(73) Proprietor: La Sezione Aurea S.a.s. Di Lavezzi Riccardo E C., Bruino (IT)
(72) Inventor: LAVEZZI, Riccardo, I-10090 Bruino (IT); LAVEZZI, Andrea, Yachi, I-10090 Bruino (IT)
(74) Representative: Lovino, Paolo
(86) International application number: PCT/IB2012/052367
(87) International publication number: WO 2012/153310

(56) References cited:
- DE-A1- 2 058 644
- DE-U1- 9 402 024
- FR-A1- 2 807 833
- JP-A- 59 037 399

## Description

### THECNICAL FIELD

The present invention relates to a pressure reduction system in a fuel gas distribution network.

### BACKGROUND ART

There are known fuel gas distribution networks see for example JP 59037399, having two or more supply lines, which are arranged in parallel and receive fuel gas at a relatively high pressure, with a maximum value of 75 bar. The pressure is reduced to a level of typically around 5 bar, or possibly lower, by means of respective pressure reducers and the fuel gas is then merged into a single delivery line, which conveys the fuel gas to the final distribution network and consequently to the users. The pressure reducers in the supply lines are of the normally closed type and are controlled by respective pilot valves of the normally open type, which adjust the control pressure in the control chambers of the respective pressure reducers based on the pressure of the fuel gas in the delivery line.

The pilot valves are calibrated to make the fuel gas flow at the same rate in the different supply lines. However, regulation is made via springs that have littler sensibility and so it is extremely difficult to achieve the same control pressure and, consequently, the even subdivision of flow between all of the pressure reducers. Therefore, one line tends to become the predominant one and supplies fuel gas at the maximum of its supply capacity. The other supply lines only become operative when the predominant line is no longer able to guarantee the requested flow rate.

Furthermore, to ensure supply even in conditions of minimum inlet pressure, the pressure reducers are sized to supply a much higher quantity of fuel gas than that required by users.

To evenly distribute the flow between the different supply lines, it is known to use an electronic control unit that controls solenoid valves placed on the lines that put the pilot valves in communication with the control chambers of the respective pressure reducers, based on the measurements of pressure transducers, so as to precisely set the same control pressure in all of the control chambers and so achieve exactly the same level of opening in all the pressure reducers.

This solution has the drawback of being relatively complex and expensive, due to the presence of a large number of electrical components and electronic controls necessary for the operation of all of the solenoid valves.

### DISCLOSURE OF INVENTION

The object of the present invention is that of making a pressure reduction system for a fuel gas distribution network that enables resolving the above-described problems in a simple and inexpensive manner and, preferably, modifying the known solutions already installed without altering the calibration of the pilot valves.

According to the present invention, a pressure reduction system for a fuel gas distribution network is provided as defined in claim 1.

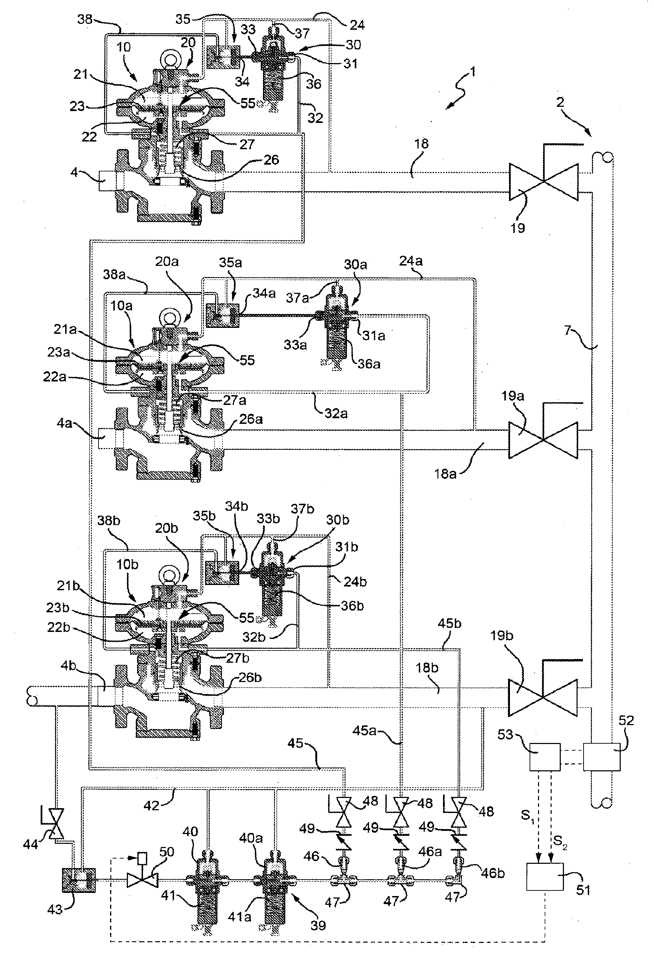

### BRIEF DESCRIPTION OF THE DRAWING

The invention will now be described with reference to the attached figure, which schematically illustrates a preferred non-limitative embodiment of the pressure reduction system for a fuel gas distribution network according to the present invention.

### BEST MODE FOR CARRYING OUT THE INVENTION

In the attached figure, reference numeral 1 indicates a pressure reduction system for a network 2 that distributes fuel gas to one or more users.

The system 1 receives fuel gas from three supply lines 4, 4a, 4b, which are arranged in parallel to each other and have the same pressure pA, with a maximum value of approximately 75 bar. The system 1 sends the fuel gas into a single delivery line 7, forming part of the network 2 and having a pressure pB, and comprises three valve assemblies 10, 10a, 10b, which allow the flow of fuel gas required by the users to flow, reducing the pressure from pA to pB and dividing this flow in as even a manner as possible. The valve assemblies 10, 10a, 10b are arranged in parallel and are mutually identical, and so the description provided below will only refer to the components of valve assembly 10. The components of valve assemblies 10a and 10b are indicated with the same reference numerals used for valve assembly 10, but are followed by reference letters "a" and "b" respectively.

The valve assembly 10 comprises a normally closed proportional-type pressure reducer 20, (i.e. of the so-called "fail to close" type). The reducer 20 adjusts the pressure of the fuel gas that flows from line 4 into a line 18, which terminates in line 7 and is equipped with a normally open, manually controlled shut-off valve 19.

The reducer 20 comprises two chambers 21, 22 separated by a diaphragm 23. Chamber 21 communicates in a permanent manner with line 18 through a pipe 24 to receive a pneumatic signal defined by the pressure pB of line 7, 18, 18a or 18b, while chamber 22 is able to receive a pneumatic signal defined by a control or loading pressure. This control pressure is obtained via the fuel gas coming from one of lines 4, 4a, 4b, as will be described in detail further on.

The reducer 20 also comprises a cut-off 26 rigidly connected to an intermediate portion of the diaphragm 23 and moveable in response to pressure pB and the control pressure to open/close the passage from line 4 to line 18. A spring 27 exerts an elastic closing action, in the same direction as the closing action of pressure pB and opposing the opening action exerted by the control pressure on the diaphragm 23.

The valve assembly 10 further comprises a pilot valve 30, which is of the proportional type and normally open (i.e. of the so-called "fail to open" type), has an outlet 31 that communicates in a permanent manner with chamber 22 through a control line 32, and has an inlet 33 that communicates with the outlet 34 of a device 35 that provides a control fluid under pressure. In particular, device 35 is a pressure reducer, not described in detail, which receives fuel gas coming from line 4 through a bypass line 38.

The valve 30 comprises a spring 36 that exerts an opening action against the closing action exerted by the pressure pB of fuel gas in a fitting 37 connected to pipe 24. When pressure pB is higher than calibration value pG, manually set by adjusting the preload of the spring 36, valve 30 is closed and consequently does not give rise to any control pressure in line 32. When pressure pB is lower than calibration value pG, valve 30 is completely open and the control pressure in line 32 is set by device 35. When pressure pB takes on calibration value pG, the pilot valve 30 regulates the section of the internal passage between inlet 33 and outlet 31 and determines the control pressure in line 32, and thus in chamber 22.

According to the invention, the system 1 comprises a control or loading line 39 that can be connected to the above-described lines through appropriate pneumatic fittings, not shown, leaving the components and the settings of assemblies 10, 10a, 10b unchanged.

Line 39 is arranged in parallel with the assemblies 10, 10a, 10b and comprises two valves 40, 40a, which are in series with each other, are defined by pneumatically controlled proportional valves of the normally open type (i.e. of the so-called "fail to open" type), and can have the same constructional characteristics as valves 30, 30a, 30b. In particular, valves 40, 40a include respective springs 41, 41a exerting an opening action, which opposes the closing action exerted by the fuel gas at pressure pB, present in a pipe 42 connected to any of lines 18, 18a, 18b or line 7.

Valve 40 is inserted between valve 40a and the outlet of a device 43 similar to devices 35, 35a, 35b. The inlet of device 43 communicates with any one of lines 4, 4a, 4b, or with a header, not shown, from which lines 4, 4a, 4b run, through a fitting equipped with a manually controlled shut-off valve 44.

The outlet of line 39 communicates with pipes 32, 32a, 32b through respective lines 45, 45a, 45b to transmit a pneumatic control signal defined by a control pressure pD that is regulated by valve 40a and, in a critical situation defined further on, by valve 40.

Valve 40a has a calibration value pGa, which can be manually set by adjusting the preload of spring 41a, corresponding to the desired target value for pressure pB, for example 5 bar, and is higher than the calibration value pG of valves 30, 30a and 30b. In particular, the difference between the calibration values pGa and pG is less than 5% of calibration value pGa (for example, 0.1 bar).

Similarly, valve 40 has a calibration value pH that can be manually set by adjusting the preload of spring 41 and is higher than the calibration value pGa of valve 40a. In particular the difference between calibration values pH and pGa is less than 5% of calibration value pGa (for example, 0.1 bar).

When pressure pB exceeds calibration values pGa and pH, valves 40a and 40 are respectively closed. The method of regulating valves 40 and 40a according to pressure pB is identical to that described above for valve 30.

Under normal operating conditions, pressure pB is equal to calibration value pGa, and therefore less than calibration value pH, and so pressure pB in pipe 42 is not able to overcome the preload of spring 41; valve 40 remains completely open and effectively does not perform any function.

Therefore, valve 40a determines the control pressure pD, which is simultaneously transmitted to all the lines 32, 32a, 32b through lines 45, 45a, 45b. In this way, with the same control pressure (pD) in chambers 22, 22a, 22b, a similar flow is supplied by lines 4, 4a, 4b, as the reducers 20, 20a, 20b have similar dimensions and therefore identical supply capacities.

Lines 45, 45a, 45b include non-return valves 46, 46a, 46b respectively, which close the passage when the pressure in the corresponding lines 32, 32a, 32b is higher than the control pressure pD at the outlet of line 39. Preferably, but not exclusively, valves 46, 46a, 46b are integrated in fittings 47, for example a T-unions, which connect lines 45, 45a, 45b to line 39 (or, alternatively and not shown, to lines 32, 32a, 32b).

In use, the pressure pB of line 7 remains substantially equal to the target value defined by calibration value pGa, valves 30, 30a, 30b remain closed, valve 40 is completely open and valve 40a is controlled by pressure pB of pipe 42 to adjust the section of its passage and determine the control pressure pD. The latter overcomes the preload of the springs 27, 27a, 27b and regulates the opening of the reducers 20, 20a, 20b to satisfy the flowrate required by the users and, at the same time keep pressure pB constant.

Operation of the system 1 is guaranteed even in the presence of failures. Possible critical conditions are listed below:

### 1) Rupture of diaphragm 23 of the reducer 20.

Chambers 21 and 22 enter in communication with each other and their pressure becomes the same, and so spring 27 closes the reducer 20. Pressure pB drops below the pGa value due to the reduction in flow and control pressure pD also tends to drop, as the rupture of the diaphragm 23 releases fuel gas from line 32 into pipe 24 through chambers 22, 21. Due to the drop in pressure pB, valve 40a opens more to make the control pressure pD rise again. If it is still sufficiently high, the control pressure pD controls the remaining reducers 20a and 20b to supply a larger quantity of fuel gas from lines 4a, 4b. Instead, if control pressure pD is too low, pressure pB continues to drop until the calibration value pG of valves 30a and 30b is reached; at this point, the latter open and set the control pressures in lines 32a and 32b, and thus in chambers 22a and 22b. Valves 46a, 46b close and prevent fuel gas from flowing from lines 32a and 32b into line 39 and thus coming out through line 32 and the rupture in the diaphragm 23. Therefore, the new control pressures in lines 32a and 32b are unaffected by the failure.

The situation is identical if the rupture occurs on diaphragm 23a or 23b.

### 2) Failure of valve 40a.

Valve 40a opens completely, thanks to the force of spring 41a, and so control pressure pD increases, thus causing greater opening of the reducers 20, 20a, 20b. In consequence, pressure pB increases, but only until it reaches calibration value pH. In fact, at this point, valve 40 starts to regulate a new control pressure pD at the outlet of line 39 so as to keep pressure pB equal to calibration value pH. The even distribution of the flow is always guaranteed by lines 45, 45a, 45b.

### 3) Failure of valve 30 (or 30a or 30b).

Valve 30 opens completely, thanks to the force of spring 36, and so the pressure in line 32 increases. The control pressure pD at the outlet of line 39 is not affected by this increase thanks to valve 46, which closes. Due to the increase in pressure in its chamber 22, reducer 20 tends to open completely, thereby unbalancing the flow between the lines 4, 4a, 4b. In this case, a safety pressure reducer (not shown) intervenes, said "reducer monitor" being located on line 4 upstream of reducer 20.

Preferably, an associated, manually controlled shut-off valve 48 is provided on each line 45, 45a, 45b, to isolate the reducers 20, 20a, 20b from line 39 in case of maintenance. Conveniently, between the fittings of each of the lines 45, 45a, 45b, an associated, manually adjusted pneumatic resistance 49 is provided, defined for example by an adjustable needle valve, to finely tune the ratio between the control pressure pD at the outlet of line 39 and the effective control pressures in chambers 22, 22a, 22b.

According to that schematically illustrated in the attached figure, line 39 also advantageously comprises a solenoid valve 50 (shown schematically), preferably positioned upstream of valves 40, 40a, before or after device 43.

Valve 50 is preferably of the on-off type. The solenoid of valve 50 is controlled by a control unit 51, for example a PLC ("Programmable Logic Controller"), in response to a signal S1 indicative of pressure pB and a signal S2 indicative of the flow rate of fuel gas in lines 18, 18a, 18b as a whole. According to tax laws and regulations at both national and international level, a meter assembly 52, of known type and shown schematically, is positioned on line 7. The meter 52 automatically and continuously supplies the values of the volumes and flowrates measured to a tax calculator 53 (shown schematically) that stores information regarding the amount fuel gas in transit, diagnostics and operational data. Signals S1 and S2 are preferably sent to the control unit 51 by the tax calculator 53. According to a variant that is not shown, signal S1 is sent from a dedicated pressure transducer, positioned on line 7.

The control unit 51 is configured to control the closure of valve 50 when signal S2 indicates that the flow rate has reached a null value, or a predefined threshold value relatively close to zero, and to reopen valve 50 when signal S1 indicates that pressure pB has dropped below a threshold S, which is stored and is lower than calibration value pGa, but higher than calibration value pG.

When the control unit 51 closes valve 50, the reducers 20, 20a, 20b are already closed, and so line 39 is closed as well. In consequence, the control pressure pD at the outlet of line 39 becomes null and valves 46, 46a, 46b close. Since chambers 22, 22a, 22b do not receive any pneumatic control signal, the pressure in these chambers becomes level with pressure pB in chambers 21, 21a, 21b, due to the effect of very small holes 55 that are usually made in the diaphragms 23, 23a, 23b.

In consequence, the system 1 is completely closed and line 7 is perfectly isolated from lines 4, 4a, 4b.

At this point, given the high capacity of line 7, small volumes of fuel gas drawn from the network 2 make pressure pB drop very slowly. When pressure pB reaches threshold S, the control unit 51 reopens valve 50, thus restoring normal operating conditions; in other words, valve 40a goes back to setting and regulating the control pressure pD with which all of the reducers 20, 20a, 20b are controlled. In this way, the small volumes of fuel gas previously drawn are reintegrated in line 7 in relatively short times, and so the corresponding flow value is sufficiently high to be measured by the meter 52.

In fact, the data plate specifications of meters that are currently installed and on the market guarantee, as a measurement or sensibility range, a ratio between "maximum measurable flow" and "minimum measurable flow" of not more than twenty. It is therefore evident that currently known meters are not capable of measuring very low flow values, especially in cases of variable flow of a seasonal nature (between summer and winter, the ratio between maximum flow and minimum flow drawn can be much larger than twenty) and variable flow of a daily nature (even the differences of flow drawn between day and night can be considerable).

Considering an embodiment (not shown) without valve 50 and the control unit 51, when the network 2 draws a small volume of fuel gas, the functioning is as follows: due to the high capacity of the line 7, this volume does not effectively make pressure pB drop, and so control pressure pD does not make the reducers 20, 20a, 20b open; in any case, a certain amount of fuel gas flows, in the form of venting, from line 39 into lines 18, 18a, 18b (through lines 32, 32a, 32b, chambers 22, 22a, 22b, holes 55, chambers 21, 21a, 21b and pipes 24, 24a, 24b) and this fuel gas goes to supply the users that draw the above-stated small volume; the flow of fuel gas drawn is continuous and so small that, if the meter is not sufficiently sensitive, it is not measured.

Therefore, in the preferred and illustrated embodiment, equipped with valve 50 and the control unit 51, closing the gas passage along line 39 avoids venting from line 39 to lines 18, 18a, 18b through holes 55 in the case of small volumes of gas drawn by users.

Incidentally, it should be noted that holes 55 define a discharge or vent that is fundamental for the functioning of assemblies 10, 10a, 10b, and so they cannot be removed. The valves of the illustrated embodiment are of the so-called "Fiorentini" type (registered trademark), where the discharge hole is made precisely in the diaphragm. Instead, in other configurations, the discharge hole can be placed in a different position; for example, in valves of the so-called "Tartarini" type (registered trademark), the discharge hole is inside the pilot valve. For the functioning and the technical effect performed by line 39 and, in particular, by valve 50, the position of the discharge hole is indifferent.

From the foregoing, it is evident that the system 1 enables having the same control pressure pD on all the reducers 20, 20a, 20b in order to equalize the level of opening of these reducers.

The system 1 is relatively simple, as it does not include electronic control systems to regulate the control pressure pD, but only to close line 39 under special operating conditions, can be made inexpensively starting from already existing pressure reduction systems and has a high level of safety in the event of failure.

Line 39, pipe 42, lines 45, 45a, 45b with valves 46, 46a, 46b, 48, 49, and the control unit 51 form an assembly that can be easily installed, via appropriate pipe fittings (not shown), on pressure reduction systems already in use. In this case, the assemblies 10, 10a, 10b do not need to be modified and, in particular, the calibration of valves 30, 30a, 30b can remain with the settings already in use, without the need to make changes. Furthermore, the control unit 51 can use signals S1 and S2 emitted by an already installed meter.

The system 1 therefore guarantees normal conditions of operation and supply for the network 2 under conditions of utmost safety and without altering the previous operation of assemblies 10, 10a, 10b and the network 2.

In addition, maintenance operations on the system 1 are relatively simple, always thanks to the fact that line 39 is in parallel with assemblies 10, 10a, 10b.

Furthermore, valve 50 and the control unit 51 enable avoiding measurement errors on the meter 52, even when the instantaneous flow drawn from the network 2 is below a minimum measurable value of the meter 52.

Moreover, the system 1 has low noise and its components are subjected to relatively low wear.

Finally, from the foregoing, it is clear that changes and modifications can be made to the system 1 described and illustrated herein without leaving the scope of protection of the present invention, as defined by the appended claims.

Valve 40 could be placed downstream with respect to valve 40a (considering the direction of fuel gas flow along line 39), without changing the operation of the system 1, as in normal conditions, valve 40 is, in any case, completely open.

In addition, a different number of valve assemblies 10, 10a, 10b could be provided and/or the pG calibration values could be different from each other, but still less than calibration value pGa.

Valve 50 could be absent in pressure reduction systems without a meter and tax calculator, or could be replaced by different equivalent solenoid valves placed on lines 45, 45a, 45b.

Lastly, valve 40 could be replaced by a solenoid valve controlled in response to a signal indicative of pressure pB; in this case, valves 40 and 50 could be replaced by a single solenoid valve, controlled to perform both the shut-off function carried out by valve 50 and the safety function carried out by valve 40.

## Claims

1. A pressure reduction system (1) for a fuel gas distribution network (2), the system comprising at least two valve assemblies (10, 10a) arranged in parallel and comprising:
a) respective pressure reducers (20, 20a) of the normally closed type, connected to respective supply lines (4, 4a) and to a delivery line (7), the opening of said pressure reducers (20, 20a) being operated by control pressures, so as to reduce the pressure of the fuel gas that flows from said supply lines (4, 4a) to said delivery line (7);
b) respective pilot valves (30, 30a) of the normally open type, the closing being controlled by the delivery pressure (pB) of said delivery line (7), when said delivery pressure (pB) reaches respective first calibration values (pG);
c) respective control lines (32, 32a) that transmit a control pressure from said pilot valves (30, 30a) to said pressure reducers (20, 20a);
**characterised by** comprising a further control line (39) arranged in parallel to said valve assemblies (10, 10a, 10b) and comprising:
- an outlet connected to all said control lines (32, 32a) to make said control pressure uniform;
- a regulating valve (40a) of the normally open type, the closing being controlled by said delivery pressure (pB) to adjust said control pressure when said delivery pressure (pB) exceeds a second calibration value (pGa), which is higher than said first calibration values (pG);
- a safety valve (40), of the normally open type, arranged in series with said regulating valve (40a), and with its closing controlled to adjust said control pressure when said delivery pressure (pB) exceeds a third calibration value (pH), which is higher than said second calibration value (pGa).

2. The system according to claim 1, **characterised in that** said safety valve (40) is defined by a pneumatically controlled valve, controlled by said delivery pressure (pB).

3. The system according to claim 1, **characterised in that** said safety valve (40) is defined by a solenoid valve, controlled by a control unit in response to a signal (S1) indicative of said delivery pressure (pB).

4. The system according to any of the preceding claims, **characterised by** comprising shut-off valve means (50), of the solenoid type, arranged in series with said regulating valve (40a) and controlled by a control unit (51) in response to a first and a second signal (S1, S2) respectively indicative of the delivery pressure (pB) and of the flow rate of said delivery line (7); said control unit (51) being configured so as to close said shut-off valve means (50) when said second signal (S2) indicates a flow rate of zero or a flow rate lower than a relatively low threshold, and so as to open said shut-off valve means (50) when said first signal (S1) indicates that the delivery pressure (pB) has reached a threshold (S), which is lower than said second calibration value (pGa) and higher than said first calibration values (pG).

5. The system according to claim 4, **characterised in that** said safety valve (40) is separate and arranged in series with respect to said shut-off valve means (50).

6. The system according to any of the preceding claims, **characterised by** comprising, for each said control line (32, 32a), a respective check valve (46, 46a) that closes the communication between the control line (32, 32a) and said further control line (39) when the pressure in the control line (32, 32a) is higher than the pressure in said further control line (39).

7. The system according to claim 6, **characterised in that** said shut-off valves (46, 46a) are integrated in respective pneumatic fittings (47).

8. The system according to any of the preceding claims, **characterised in that** said further control line (39) comprises a pressure reducing device (43) having an inlet communicating with said supply lines (4, 4a) and an outlet arranged in series with said regulating and safety valves (40a, 40).

9. The system according to any of the preceding claims, **characterised in that** said regulating valve (40a) comprises a spring (41a) having a preload that is adjustable to obtain the desired value of the second calibration value (pGa).

## Patentansprüche

1. Druckminderungssystem (1) für ein Brennstoffgasverteilungsnetzwerk (2), wobei das System zumindest zwei Ventilanordnungen (10, 10a) aufweist, die parallel angeordnet sind und Folgendes aufweisen:
a) jeweilige Druckminderer (20, 20a) der normalerweise geschlossenen Bauart, die mit jeweiligen Versorgungsleitungen (4, 4a) und einer Lieferleitung (7) verbunden sind, wobei die Öffnung der Druckminderer (20, 20a) durch Steuerdrücke betätigt wird, um den Druck des Brennstoffgases zu verringern, welches von den Versorgungsleitungen (4, 4a) zur Lieferleitung (7) fließt;
b) jeweilige Pilot- bzw. Vorsteuerventile (30, 30a) der normalerweise offenen Bauart, wobei das Schließen durch den Lieferdruck (pB) der Lieferleitung gesteuert wird, wenn der Lieferdruck (pB) jeweilige Kalibrierungswerte (pG) erreicht;
c) jeweilige Steuerleitungen (32, 32a), die einen Steuerdruck von den Vorsteuerventilen (30, 30a) zu den Druckminderern (20, 20a) übertragen;
**dadurch gekennzeichnet, dass** es weiter eine Steuerleitung (39) aufweist, die parallel zu den Ventilanordnungen (10, 10a, 10b) angeordnet ist und Folgendes aufweist:
- einen Auslass, der mit allen Steuerleitungen (32, 32a) verbunden ist, um den Steuerdruck gleichförmig zu machen;
- ein Regelventil (40a) der normalerweise offenen Bauart, wobei das Schließen durch den Lieferdruck (pB) gesteuert wird, um den Steuerdruck einzustellen, wenn der Lieferdruck (pB) einen zweiten Kalibrierungswert (pGa) überschreitet, der höher ist als der erste Kalibrierungswert (pG);
- ein Sicherheitsventil (40) der normalerweise offenen Bauart, welches in Reihe mit dem Regelventil (40a) angeordnet ist, und wobei dessen Schließvorgang gesteuert wird, um den Steuerdruck einzustellen, wenn der Lieferdruck (pB) einen dritten Kalibrierungswert (pH) überschreitet, der höher ist als der zweite Kalibrierungswert (pGa).

2. System nach Anspruch 1, **dadurch gekennzeichnet, dass** das Sicherheitsventil (40) durch ein pneumatisch gesteuertes Ventil definiert wird, welches durch den Lieferdruck (pB) gesteuert wird.

3. System nach Anspruch 1, **dadurch gekennzeichnet, dass** das Sicherheitsventil (40) durch ein Elektromagnetventil definiert wird, welches durch eine Steuereinheit ansprechend auf ein Signal (S1) gesteuert wird, welches den Lieferdruck (pB) anzeigt.

4. System nach einem der vorhergehenden Ansprüche, **dadurch gekennzeichnet, dass** es Absperrventilmittel (50) der Elektromagnetbauart aufweist, die in Reihe mit dem Regelventil (40a) angeordnet sind und durch eine Steuereinheit (51) ansprechend auf ein erstes bzw. ein zweites Signal (S1, S2) gesteuert wird, die den Lieferdruck (pB) und die Flussrate der Lieferleitung (7) anzeigen; wobei die Steuereinheit (51) so konfiguriert ist, dass sie die Absperrventilmittel (50) schließt, wenn das zweite Steuersignal (S2) eine Flussrate von null oder eine Flussrate von weniger als eine vergleichsweise niedrige Schwelle anzeigt und so dass sie die Absperrventilmittel (50) öffnet, wenn das erste Signal (S1) anzeigt, dass der Lieferdruck (pB) eine Schwelle (S) erreicht hat, die niedriger ist als der zweite Kalibrierungswert (pGa) und höher ist als der erste Kalibrierungswert (pG).

5. System nach Anspruch 4, **dadurch gekennzeichnet, dass** das Sicherheitsventil (40) separat ist und in Reihe bezüglich der Absperrventilmittel (50) angeordnet ist.

6. System nach einem der vorhergehenden Ansprüche, **dadurch gekennzeichnet, dass** es für jede Steuerleitung (32, 32a) ein jeweiliges Rückschlagventil (46, 46a) aufweist, welches die Verbindung zwischen der Steuerleitung (32, 32a) und der weiteren Steuerleitung (39) schließt, wenn der Druck in der Steuerleitung (32, 32a) höher ist als der Druck in der weiteren Steuerleitung (39).

7. System nach Anspruch 6, **dadurch gekennzeichnet, dass** die Absperrventile (46, 46a) in jeweiligen pneumatischen Armaturen (47) integriert sind.

8. System nach einem der vorhergehenden Ansprüche, **dadurch gekennzeichnet, dass** die weitere Steuerleitung (39) eine Druckminderungsvorrichtung (43) aufweist, die einen Einlass hat, der mit den Versorgungsleitungen (4, 4a) in Verbindung steht, und einen Auslass, der in Reihe mit dem Regel- und Sicherheitsventilen (40a, 40) angeordnet ist.

9. System nach einem der vorhergehenden Ansprüche, **dadurch gekennzeichnet, dass** das Regelventil (40a) eine Feder (41 a) mit einer Vorspannung hat, die einstellbar ist, um den erwünschten Wert des zweiten Kalibrierungswertes (pGa) zu erhalten.

## Revendications

1. Système de réduction de pression (1) pour un réseau de distribution de combustible gazeux (2), le système comprenant au moins deux ensembles de vannes (10, 10a) agencés en parallèle et comprenant :
a) des réducteurs de pression (20, 20a) respectifs du type normalement fermé, reliés à des conduites d'alimentation (4, 4a) respectives et à une conduite de distribution (7), l'ouverture desdits réducteurs de pression (20, 20a) étant effectuée par des pressions de commande, de manière à réduire la pression du combustible gazeux qui s'écoule desdites conduites d'alimentation (4, 4a) vers ladite conduite de distribution (7) ;
b) des vannes pilotes (30, 30a) respectives du type normalement ouvert, la fermeture étant commandée par la pression de distribution (pB) de ladite conduite de distribution (7), lorsque ladite pression de distribution (pB) atteint des premières valeurs d'étalonnage (pG) respectives ;
c) des conduites de commande (32, 32a) respectives qui transmettent une pression de commande desdites vannes pilotes (30, 30a) aux dits réducteurs de pression (20, 20a) ;
**caractérisé en ce qu'**il comprend une conduite de commande supplémentaire (39) agencée en parallèle avec lesdits ensembles de vannes (10, 10a, 10b) et comprenant :
- une sortie reliée à toutes lesdites conduites de commande (32, 32a) pour rendre ladite pression de commande uniforme ;
- une vanne de régulation (40a) du type normalement ouvert, la fermeture étant commandée par ladite pression de distribution (pB) pour ajuster ladite pression de commande lorsque ladite pression de distribution (pB) dépasse une deuxième valeur d'étalonnage (pGa), qui est supérieure aux dites premières valeurs d'étalonnage (pG) ;
- une vanne de sécurité (40), du type normalement ouvert, agencée en série avec ladite vanne de régulation (40a), et dont la fermeture est commandée pour ajuster ladite pression de commande lorsque ladite pression de distribution (pB) dépasse une troisième valeur d'étalonnage (pH), qui est supérieure à ladite deuxième valeur d'étalonnage (pGa).

2. Système selon la revendication 1, **caractérisé en ce que** ladite vanne de sécurité (40) est définie par une vanne à commande pneumatique, commandée par ladite pression de distribution (pB).

3. Système selon la revendication 1, **caractérisé en ce que** ladite vanne de sécurité (40) est définie par une électrovanne, commandée par une unité de commande en réponse à un signal (S1) indicatif de ladite pression de distribution (pB).

4. Système selon l'une quelconque des revendications précédentes, **caractérisé en ce qu'**il comprend des moyens formant vanne d'arrêt (50), du type à solénoïde, agencés en série avec ladite vanne de régulation (40a) et commandés par une unité de commande (51) en réponse à des premier et deuxième signaux (S1, S2) indicatifs respectivement de la pression de distribution (pB) et du débit de ladite conduite de distribution (7) ; ladite unité de commande (51) étant configurée de manière à fermer lesdits moyens formant vanne d'arrêt (50) lorsque ledit deuxième signal (S2) indique un débit nul ou un débit inférieur à un seuil relativement faible, et de manière à ouvrir lesdits moyens formant vanne d'arrêt (50) lorsque ledit premier signal (S1) indique que la pression de distribution (pB) a atteint un seuil (S), qui est inférieur à ladite deuxième valeur d'étalonnage (pGa) et supérieur aux dites premières valeurs d'étalonnage (pG).

5. Système selon la revendication 4, **caractérisé en ce que** ladite vanne de sécurité (40) est séparée et agencée en série par rapport aux dits moyens formant vanne d'arrêt (50).

6. Système selon l'une quelconque des revendications précédentes, **caractérisé en ce qu'**il comprend, pour chaque dite conduite de commande (32, 32a), un clapet anti-retour (46, 46a) respectif qui ferme la communication entre la conduite de commande (32, 32a) et ladite conduite de commande supplémentaire (39) lorsque la pression dans la conduite de commande (32, 32a) est supérieure à la pression dans ladite conduite de commande supplémentaire (39).

7. Système selon la revendication 6, **caractérisé en ce que** lesdites vannes d'arrêt (46, 46a) sont intégrées dans des raccords pneumatiques (47) respectifs.

8. Système selon l'une quelconque des revendications précédentes, **caractérisé en ce que** ladite conduite de commande supplémentaire (39) comprend un dispositif de réduction de pression (43) comportant une entrée communiquant avec lesdites conduites d'alimentation (4, 4a) et une sortie agencée en série avec lesdites vannes de régulation et de sécurité (40a, 40).

9. Système selon l'une quelconque des revendications précédentes, **caractérisé en ce que** ladite vanne de régulation (40a) comprend un ressort (41a) ayant une précharge qui est ajustable pour obtenir la valeur souhaitée de la deuxième valeur d'étalonnage (pGa).
